# EUROPEAN PATENT SPECIFICATION

(11) **EP 4 103 375 B1**
(45) Date of publication and mention of the grant of the patent: **13.08.2025**
(21) Application number: 21754143.2
(22) Date of filing: 12.02.2021
(51) Int. Cl.: B27D 1/08, B27M 3/18, B32B 21/14, A47B 97/00, B27M 3/00, B32B 1/00, B32B 1/08, B32B 3/06, B32B 7/12, B32B 15/02, B32B 21/08, B32B 21/13, A47B 96/14, B27C 7/00, B27F 1/16, B32B 15/10, B32B 21/02

(54) **METHOD FOR PRODUCING A STRUCTURAL ELEMENT, STRUCTURAL ELEMENT AND A PIECE OF FURNITURE**
VERFAHREN ZUR HERSTELLUNG EINES BAUTEILS, BAUTEIL UND MÖBEL
PROCÉDÉ DE PRODUCTION D'UN ÉLÉMENT STRUCTURAL, ÉLÉMENT STRUCTURAL ET MEUBLE

(30) Priority: 12.02.2020 SE 2050151
(43) Date of publication of application: 21.12.2022
(73) Proprietor: Inter IKEA Systems B.V., 2616 LN Delft (NL)
(72) Inventor: ANDERSSON, Fredrik, 291 95 FÄRLÖV (SE)
(74) Representative: Ström & Gulliksson AB
(86) International application number: PCT/SE2021/050113
(87) International publication number: WO 2021/162618

(56) References cited:
- EP-A1- 3 402 639
- WO-A1-2017/123143
- WO-A1-98/22675
- SE-A1- 1 850 336
- SI-A- 20 258
- US-A- 5 438 812
- US-A- 5 438 812
- US-A- 6 152 840
- US-A1- 2018 361 615
- US-A1- 2018 361 615

## Description

### Technical field

The present disclosure relates to structural element, for instance for furnishing. By furnishing is here generally meant furniture and furniture-like elements suitable for the interior of a building such as a residential or office building, for instance.

### Background

A general problem with such structural elements is how they can be provided at a reasonable cost for a given strength or other quality. US2018/361615 A discloses a structural element, for instance for furnishing. Further prior art is found in WO2017/123143 A.

### Summary

One object of the present disclosure is therefore to provide a structural element and a method for producing such a structural element with good properties and at a low cost.

This object is achieved by means of a structural element as defined in claim 1. More particularly, a structural element of the initially mentioned kind comprises a core element in a first material and at least one end element in a second material being different from said first material, wherein the core element and the at least one end element are joined to form a composite element with at least one joint, the composite element having at least one cross section with an outer contour where any corners have an outer angle smaller than 270 degrees, and a veneer layer in a veneer material, attached to the composite element in such a way that it at least partially covers said at least one joint. In this way it is possible to provide a structural element with a uniform outer surface optimized for one property, while the inner core is optimized for another property. The veneer layer may be applied smoothly thanks to the absence of sharp corners.

All cross sections along the composite element length may have an outer contour where any corners have an outer angle smaller than 270 degrees.

For instance, the core element may be made in beech wood while the veneer and end elements may be made in oak wood. This provides the appearance of an oak element, while the product is comparatively cheaper thanks to the lower price of the core element, which may constitute the larger proportion of the structural element.

At the same time, the product is lighter and easier to process, e.g. to apply screws, than a solid oak structural element.

The core element may be elongated, and preferably one end element is provided at each end surface of the core element.

The veneer layer may cover a major part of, or even all of, the core element.

The second material may be a solid wood of a second species, such as selected from a group comprising oak, hickory, mahogany, and teak.

The second material may be harder than the first material.

The veneer may be made of the same species of solid wood as the second material.

The first material may be solid wood of a first species, such as selected from a group comprising beech, birch, cedar, aspen, maple, spruce and pine.

The core element may otherwise be made of a material selected from a group comprising particle boards, MDF- and HDF-boards, and/or the core element can be made as a hollow construction, such as a hollow tube of solid wood, plywood, metal, plastic or similar.

The joint may be selected among finger joints and butt joints, for instance.

The structural element may be a furniture pole, and/or the structural element typically has a cross-section being circular, oval, or elliptical. This cross-section may be the same along the entire length of the structural element and/or the furniture pole.

The veneer layer may be applied as one single sheet of veneer covering the entire periphery of the composite element, and the single sheet of veneer may comprise two or more joined pieces.

Any corners of the cross section of the structural element may have an outer angle being 252 degrees (pentagon) or smaller, more preferred 240 degrees (hexagon) or smaller, more preferred 232 degrees (heptagon) or smaller, and more preferred 225 degrees (octagon) or smaller.

The present disclosure further considers a piece of furniture comprising a structural element as defined above.

Such a piece of furniture may be a table, a bed frame, a cupboard, a bookcase, a shelf unit, a shelf, a chair or a sofa.

Typically, the structural element may form part of a leg structure of such a piece of furniture.

The present disclosure further considers a method for producing a structural element, for instance for furnishing. The method includes providing a core element in a first material and at least one end element in a second material being different from said first material, joining the core element and the at least one end element to form a composite element with at least one joint, shaping the composite element, into a shape with a cross section having an outer contour where any corners, if present, have an outer angle smaller than 270 degrees, and providing, on the composite element, a veneer layer in a veneer material, such that it covers said at least one joint. The veneer layer is applied as one single sheet of veneer, covering the entire periphery of the composite element. This provides the same advantages as in the above defined device.

The core element may be elongated, and preferably one end element may be provided at each end surface of the core element.

The veneer layer may cover the major part of, or even all of, the core element.

The second material may be a solid wood of a second species, such as selected from a group comprising oak, hickory, mahogany, and teak.

The second material may be harder than the first material.

The veneer may be made of the same species of solid wood as the second material.

The first material may be solid wood of a first species, such as selected from a group comprising beech, birch, cedar, aspen, maple, spruce and pine.

The first and second materials may comprise solid wood, and wood fibers of the first and second materials may substantially extend in the elongate direction in which said core element is elongated.

The at least one joint may extend substantially in a joint plane, and the elongate direction may form a normal to the joint plane.

The veneer material may be the same as the second material.

The veneer may cover the core element along the entire length thereof.

The veneer material may even extend from a first to a second end of the structural element.

The fibers of the veneer may extend in the same direction as a fiber direction of the end element.

The veneer layer may be provided, at its peripheral end regions, with reduced thickness, thereby providing an overlapping peripheral joint having the same thickness as the veneer outside of the end regions.

The joint may be selected among finger joints and butt joints, for instance.

Prior to attaching the veneer, the composite element may be turned, such as by means of a lathe, into a shape with circular cross section.

### Brief description of the drawings

Figs 1-3 illustrate basic steps for providing a composite element.
Fig 4 shows a composite element which has been processed by turning.
Fig 5 illustrates the application of veneer.
Fig 6 shows a finished furniture pole.
Figs 7-8 illustrate two possible applications for a structural element produced according to the present disclosure.
Fig 9 illustrates a high-volume manufacturing method.
Fig 10 illustrates an example of a composite element with a polygonal cross section.

### Detailed description

The present disclosure relates to furnishing the interior of a building. By furnishing is here meant the provision of furniture, but also other decorative and/or functional items such as for instance balusters and handrails for stairs, architraves, etc.

Throughout the history of mankind, solid wood has been a highly appreciated material for furnishing, although initially few alternatives were available. At present, other materials such as reinforced plastic, fiber boards, and metal offer structurally competitive and certainly cheaper alternatives, but solid wood remains high in demand. Not only does solid wood possess beauty, but also considerable technical advantages, especially as its fibers by nature mostly extend along an almost uniform main direction, which gives a high elastic modulus against bending about an axis perpendicular to that main direction.

In the following, an improved method for providing a structural element comprising solid wood is outlined. Generally, this method provides a structural element whose outer surface can be optimized with regard to one parameter, while its inner core is optimized with regard to another.

In this method, there is provided a core element in a first material and at least one end element in a second material being different from said first material. The core element and the at least one end element are joined to form a composite element with at least one joint. Finally, there is provided, on the composite element, a veneer layer, such that the veneer layer at least partially covers the joint.

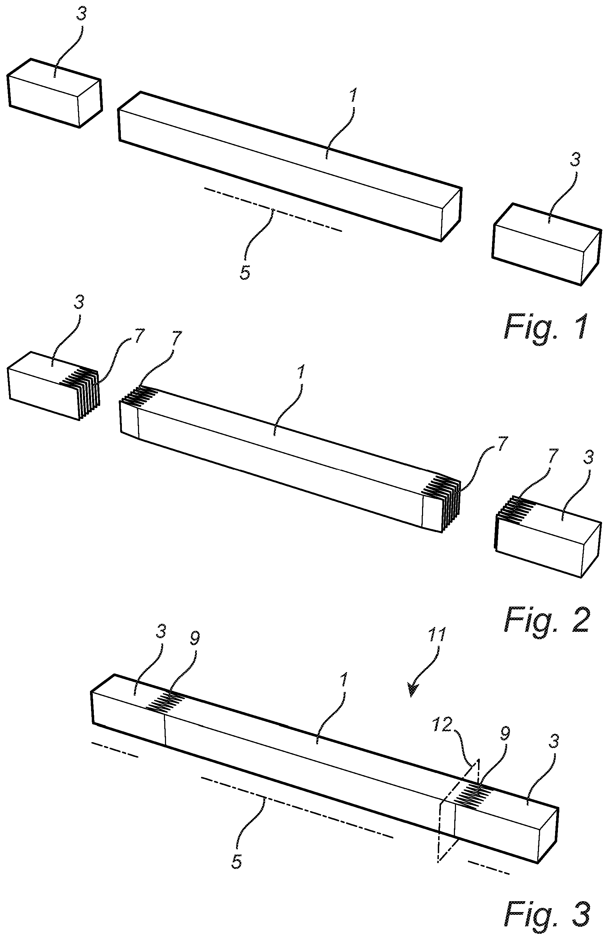

Figs 1-3 illustrate basic steps for providing a composite element. Fig 1 shows a core element 1 and first and second end elements 3. Selection of material will be discussed later, but in one example, the core element 1 may be made in beech while the end elements 3 may be made in oak. The core element 1 is illustrated as elongated in a main direction 5, and typically this is aligned with the wood main fiber direction of the core element 1. The core element 1 as well as the end elements 3 are illustrated as parallelepiped shaped although this is not necessary. Further, it is not necessary in all applications to use one end element 3 at each end of the core element 1. In many cases, one end element 3 at one end of the core element 1 may be enough.

In fig 2 those end surfaces 7 of the core element 1 and of the end elements 3 that are facing another one of the elements have been machined to prepare for joining by means of finger joints.

Fig 3 shows the core element 1 and the end elements 3 being joined by finger joints 9, usually by means of a glue, to form a composite element 11. The finger joints 9 generally extend in a plane 12 that is perpendicular to the main direction 5 of the core element 1, although this is not necessary.

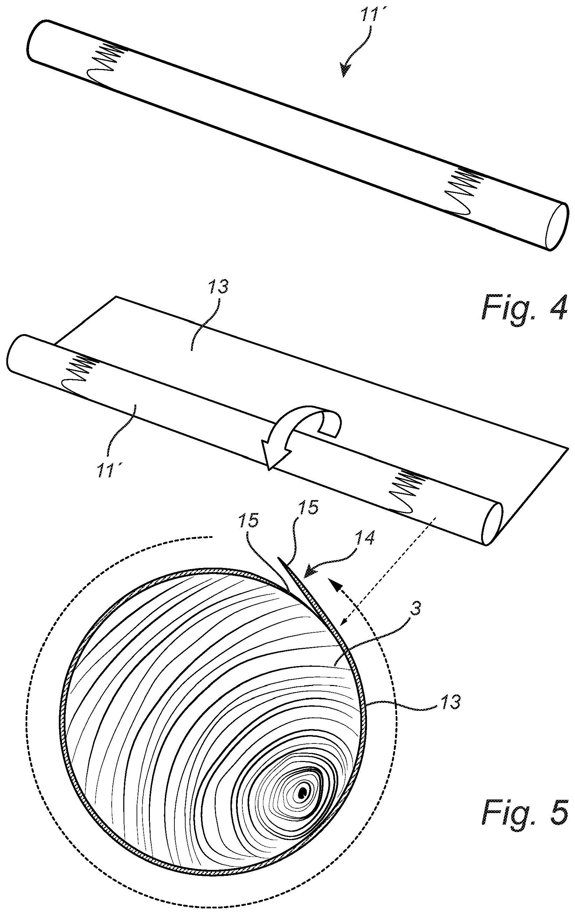

It is possible to process the finished composite element 11 in different ways before further steps of the method are carried out. Fig 4 shows a core element 11' which has been processed, by means of turning, into an elongated cylindrical shape. Other possible processing steps include for instance grinding or cutting off corners to obtain an octagonal shape, rounding corners, etc. Further, the core element may be turned to be tapering, e.g. towards one end thereof.

In general, the composite element may preferably have a cross section along its length which is free from sharp corners, which may be defined as right angle corners or sharper, for instance.

This facilitates the application of a continuous layer of veneer that may be wrapped around the outer contour of the composite element 11 as will be described.

Free from sharp corners may be defined as having an outer contour where any corners all have an outer angle smaller than 270 degrees. This can be accomplished for instance by a polygonal shape with five or more equal corners, but of course also by a wholly or partly circular, elliptical, or oval shape, for instance.

Fig 5 illustrates the application of a veneer layer 13 on the core element 11'. Veneer application as such is well known, typically a layer with a thickness ranging from 0.2-2.0 mm is applied with a glue layer and is wrapped around the composite core element 11'. It may be preferred to provide the veneer layer 13 as a single sheet wrapping the entire outer contour of the core element 11' thereby requiring only one veneer seam along the length of the element. As is shown in the cross section of fig 5, an overlap 14 may be provided, and the peripheral end regions 15 of the veneer 13 at this overlap 14 may have a tapering thickness so as to achieve a uniform thickness of the veneer layer around the periphery of the composite core element 11'.

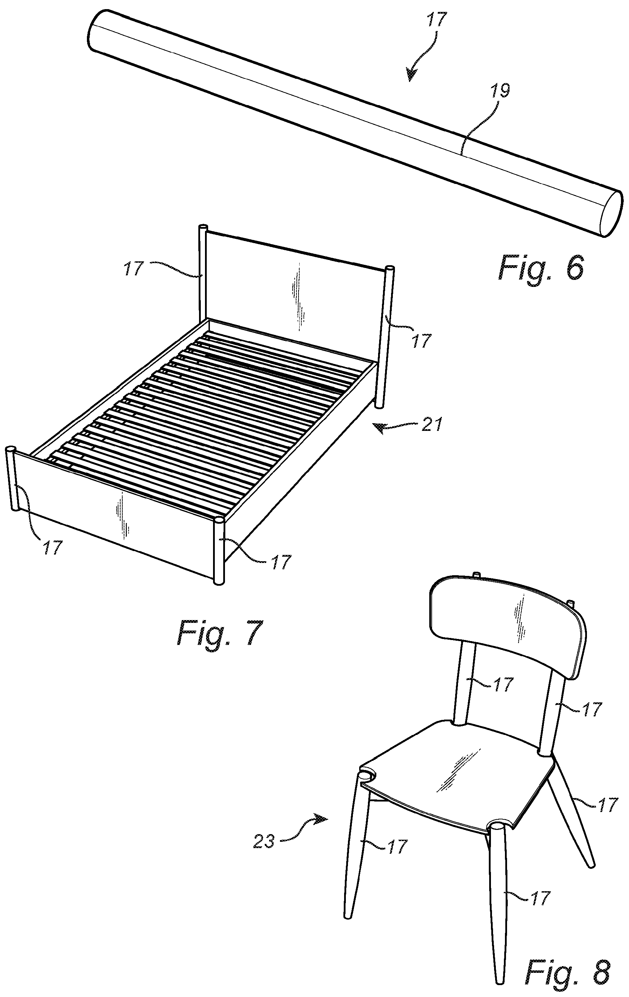

Fig 6 shows a finished furniture pole 17 obtained by the application of veneer in fig 5. The seam 19 of the veneer is indicated in the drawing although this may only be visible as a change of pattern in the veneer surface.

Figs 7-8 illustrates two possible applications for a structural element produced according to the present disclosure. Fig 7 shows a bed frame 21 where a furniture pole 17 as shown in fig 6 may be used as an upright in each corner, and fig 8 shows a chair 23, where such furniture poles 17 may be used in each leg as well as uprights for the backrest.

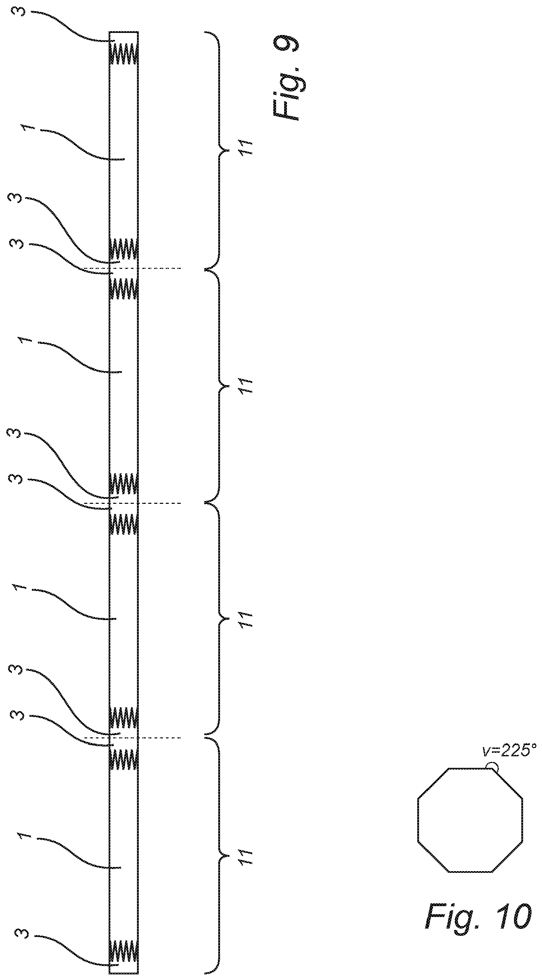

Fig 9 illustrates schematically a high-volume production method, where a number of composite elements are formed at the same time. First a number of elements of the first material, intended to form core elements 1, are joined with intervening elements of the second material, intended to form end elements 3. Then, the intervening elements of the second material are cut off, such as by means of a saw, at cutting lines schematically illustrated in fig. 9, such that each cutting position form one end element 3 for one composite element 11 and one end element 3 for another composite element.

As mentioned, the second material, making up the end element 3, and possibly also the veneer layer 13, of the structural element can be optimized with regard to one parameter, while the first material, making up the core element 1, is optimized with regard to another. Those materials may be selected according to a range of different parameters.

The first material, of the core element 1, may be solid wood of a first species and the second material, of end elements 3 and/or veneer 13, may be solid wood of a second species. Typically, the first material may then be a cheaper type of wood that makes up the bulk of the final product, while the second material is a more expensive type of wood with a desired visual appearance. In addition to more expensive types of wood, the second material could in principle include wood species whose use should be limited due to being rare.

Typically, the first material may be selected from a group comprising beech, birch, cedar, aspen, maple, spruce and pine, and the second material may be selected from a group comprising oak, hickory, mahogany, and teak.

In another example, the second material is a solid wood of a harder species than the first material. For instance, in the above example, beech is softer than oak and may more easily be machined, e.g. by drilling, for instance to attach screws or the like that are used to connect the structural element, for instance a furniture pole, to other elements in a piece of furniture. By a softer solid wood material is here meant one that has a lower Janka hardness rating.

In addition to finger joints, butt joints or other types of joints may be considered to joining the core elements to the end elements.

According to other embodiments the first material making up the core element could be other types of materials, such as particle boards, MDF and HDF, that provide mechanical strength and low price. Still further, the first material making up the core element could be a hollow construction, such as a hollow tube of solid wood or a hollow tube of plywood or other material, e.g. plastic or metal.

As mentioned, it is not necessary to use one end element at each end of the core element. In many cases one end of a structural element may be concealed, e.g. pointing downwards towards a floor, and it may be acceptable to allow the core element to proceed to the outer element surface at that end.

As mentioned, a composite element may have a polygonal cross section which is illustrated in Fig. 10 with an octagonal cross-section which has eight outer corners all with the outer angle 225 degrees. Such a cross section with relatively non-sharp corners is well suited for being wrapped with a thin veneer being glued thereto.

The present disclosure is not limited to the above-described may be varied and altered in different ways within the scope of the appended claims.

The present disclosure thus relates to a structural element and a method for producing a structural element for furnishing, e.g. for furniture. There is provided a core element in a first material and at least one end element in a second material, which are joined to form a composite element with at least one joint. A veneer layer in a veneer material is provided on the composite element, such that it at least partially covers said at least one joint. This allows a structural element to be provided which has a full outer surface in the second material to provide a second material finish, although the core is provided in another material which may have other preferred properties.

## Claims

1. A structural element, for instance for furnishing, comprising a core element (1) in a first material and at least one end element (3) in a second material being different from said first material, wherein the core element and the at least one end element are joined to form a composite element (11) with at least one joint (9), the composite element (11) having at least one cross section with an outer contour where any corners have an outer angle smaller than 270 degrees, and a veneer layer (13) in a veneer material, attached to the composite element in such a way that it at least partially covers said at least one joint, **characterized in that** the composite element (11) has a cross-section being circular, oval or elliptical.

2. A structural element according to claim 1, wherein all cross sections along the composite element (11) length have an outer contour where any corners have an outer angle smaller than 270 degrees.

3. A structural element according to claim 1 or 2, wherein the core element (1) is elongated, preferably one end element (3) is provided at each end surface of the core element, and/or the veneer layer (13) covering the major part of, or even all of, the core element.

4. A structural element according to any of claims 1-3, wherein the second material is a solid wood of a second species and/or wherein the second material is harder than the first material, and/or wherein the veneer is made of the same species of solid wood as the second material, and/or wherein the first material is solid wood of a first species.

5. A structural element according to any of the preceding claims, wherein the first material is selected from a group comprising beech, birch, cedar, aspen, maple, spruce and pine, and the second material is selected from a group comprising oak, hickory, mahogany, and teak, or wherein the core element (1) is made of a material selected from a group comprising particle boards, MDF- and HDF-boards, and/or the core element is a hollow construction, such as a hollow tube of solid wood, plywood, metal, plastic or similar.

6. A structural element according to any of the preceding claims, wherein said joint (9) is selected among finger joints and butt joints.

7. A structural element according to any of the preceding claims, wherein the structural element is a furniture pole (17), optionally wherein the structural element has the same circular, oval or elliptical cross-section along its entire length.

8. A structural element according to any of the preceding claims, wherein the veneer layer is applied as one single sheet of veneer covering the entire periphery of the composite element, optionally wherein said single sheet of veneer may comprise two or more joined pieces.

9. A structural element according to any of the preceding claims, wherein any corners of the cross section of the structural element have an outer angle being 252 degrees or smaller, more preferred 240 degrees or smaller, more preferred 232 degrees or smaller, and more preferred 225 degrees or smaller.

10. A piece of furniture (23) **characterized by** comprising a structural element as defined in any of the preceding claims, optionally wherein said piece of furniture is a table, a bed frame, a cupboard, a bookcase, a shelf unit, a shelf, a chair or a sofa, and/or wherein said structural element forms part of a leg structure of said piece of furniture.

11. A method for producing a structural element, for instance for furnishing, **characterized by**
- providing a core element (1) in a first material and at least one end element (3) in a second material being different from said first material;
- joining the core element and the at least one end element to form a composite element with at least one joint (9);
- shaping the composite element, into a shape with a cross section having an outer contour where any corners, if present, have an outer angle smaller than 270 degrees, and
- providing, on the composite element, a veneer layer (13) in a veneer material, such that it covers said at least one joint (9), wherein the veneer layer is applied as one single sheet of veneer, covering the entire periphery of the composite element.

12. Method according to claim 11, wherein the core element (1) is elongated, and preferably one end element (3) is provided at each end surface of the core element, and/or the veneer layer (13) covering the major part of, or even all of, the core element, and/or wherein the second material is a solid wood of a second species and/or wherein the second material is harder than the first material, and/or wherein the veneer is made of the same species of solid wood as the second material, and/or wherein the first material is solid wood of a first species, and/or wherein the first material is selected from a group comprising beech, birch, cedar, aspen, maple, spruce and pine, and/or the second material is selected from a group comprising oak, hickory, mahogany, and teak, and/or wherein the first and second materials comprise solid wood, and wood fibers of the first and second materials substantially extend in the elongate direction (5) in which said core element is elongated.

13. Method according to any of claims 11 or 12, wherein said at least one joint (9) extends substantially in a joint plane (12) and said elongate direction (5) forms a normal to the joint plane.

14. Method according to any of claims 11-13, wherein the veneer material is the same as the second material, and/or the veneer material extends from a first to a second end of the structural element, and/or the veneer covers the core element along its entire length, and/or the fibers of the veneer extends in the same direction as a fiber direction of the end element, and/or the veneer layer is provided, at its peripheral end regions, with reduced thickness thereby providing an overlapping peripheral joint having the same thickness as the veneer outside of the end regions.

15. Method according to any of claims 11-14, wherein said joint (9) is selected among finger joints and butt joints, and/or wherein, prior to attaching said veneer, the composite element is turned, such as by means of a lathe, into a shape with circular cross section.

## Patentansprüche

1. Bauteil, beispielsweise für Einrichtungen, umfassend ein Kernelement (1) aus einem ersten Material und mindestens ein Endelement (3) aus einem zweiten Material, das zu besagtem ersten Material unterschiedlich ist, wobei das Kernelement und das mindestens eine Endelement verbunden sind, um ein Verbundelement (11) mit mindestens einer Verbindung (9) zu bilden, wobei das Verbundelement (11) mindestens einen Querschnitt mit einer Außenkontur aufweist, wo beliebige Ecken einen Außenwinkel von weniger als 270 Grad aufweisen, und eine Furnierschicht (13) aus einem Furniermaterial, die auf dem Verbundelement derart angebracht ist, dass sie besagte mindestens eine Verbindung mindestens teilweise bedeckt, **dadurch gekennzeichnet, dass** das Verbundelement (11) einen Querschnitt aufweist, der kreisförmig, oval oder elliptisch ist.

2. Bauteil nach Anspruch 1, wobei alle Querschnitte entlang der Länge des Verbundelements (11) eine Außenkontur aufweisen, wobei beliebige Ecken einen Außenwinkel von weniger als 2/70 Grad aufweisen.

3. Bauteil nach Anspruch 1 oder 2, wobei das Kernelement (1) länglich ist, vorzugsweise ein Endelement (3) an jeder Endfläche des Kernelements bereitgestellt ist, und/oder die Furnierschicht (13) den Hauptteil des oder sogar das gesamte Kernelement(s) bedeckt.

4. Bauteil nach einem der Ansprüche 1-3, wobei das zweite Material ein Massivholz einer zweiten Art ist und/oder wobei das zweite Material härter als das erste Material ist, und/oder wobei das Furnier aus der gleichen Art von Massivholz wie das zweite Material hergestellt ist, und/oder wobei das erste Material Massivholz einer ersten Art ist.

5. Bauteil nach einem der vorhergehenden Ansprüche, wobei das erste Material aus einer Gruppe ausgewählt ist, die Buche, Birke, Zeder, Aspe, Ahorn, Fichte und Kiefer umfasst, und das zweite Material aus einer Gruppe ausgewählt ist, die Eiche, Hickory, Mahagoni und Teak umfasst, oder wobei das Kernelement (1) aus einem Material hergestellt ist, das aus einer Gruppe ausgewählt ist, die Spanplatten, MDF- und HDF-Platten umfasst, und/oder das Kernelement eine hohle Konstruktion ist, wie ein hohles Rohr aus Massivholz, Sperrholz, Metall, Kunststoff oder ähnlichem.

6. Bauteil nach einem der vorhergehenden Ansprüche, wobei besagte Verbindung (9) aus Keilzinkenverbindungen und Stoßverbindungen ausgewählt ist.

7. Bauteil nach einem der vorhergehenden Ansprüche, wobei das Bauteil ein Möbelpfosten (17) ist, optional wobei das Bauteil den gleichen kreisförmigen, ovalen oder elliptischen Querschnitt entlang seiner gesamten Länge aufweist.

8. Bauteil nach einem der vorhergehenden Ansprüche, wobei die Furnierschicht als eine einzelne Folie aus Furnier aufgebracht ist, die den gesamten Umfang des Verbundelements bedeckt, optional wobei besagte einzelne Folie aus Furnier zwei oder mehr verbundene Stücke umfassen kann.

9. Bauteil nach einem der vorhergehenden Ansprüche, wobei beliebige Ecken des Querschnitts des Bauteils einen Außenwinkel von 252 Grad oder weniger, bevorzugter 240 Grad oder weniger, bevorzugter 232 Grad oder weniger und bevorzugter 225 Grad oder weniger aufweisen.

10. Möbelstück (23), **dadurch gekennzeichnet, dass** es ein Bauteil nach einem der vorhergehenden Ansprüche umfasst, optional wobei besagtes Möbelstück ein Tisch, ein Bettgestell, ein Schrank, ein Bücherschrank, eine Regaleinheit, ein Regal, ein Stuhl oder ein Sofa ist, und/oder wobei besagtes Bauteil einen Teil einer Beinstruktur besagten Möbelstücks bildet.

11. Verfahren zur Herstellung eines Bauteils, beispielsweise für Einrichtungen, **gekennzeichnet durch**
- Bereitstellen eines Kernelements (1) aus einem ersten Material und mindestens eines Endelements (3) aus einem zweiten Material, das zu besagtem ersten Material unterschiedlich ist;
Verbinden des Kernelements und des mindestens einen Endelements, um ein Verbundelement mit mindestens einer Verbindung (9) zu bilden;
- Formen des Verbundelements in eine Form mit einem Querschnitt, die eine Außenkontur aufweist, wobei beliebige Ecken, falls vorhanden, einen Außenwinkel von weniger als 270 Grad aufweisen, und
- Bereitstellen, auf dem Verbundelement, einer Furnierschicht (13) aus einem Furniermaterial, so dass sie besagte mindestens eine Verbindung (9) bedeckt, wobei die Furnierschicht als eine einzelne Folie aus Furnier aufgebracht ist, die den gesamten Umfang des Verbundelements bedeckt.

12. Verfahren nach Anspruch 11, wobei das Kernelement (1) länglich ist, und vorzugsweise ein Endelement (3) an jeder Endfläche des Kernelements bereitgestellt ist, und/oder die Furnierschicht (13) den Hauptteil des oder sogar das gesamte Kernelement(s) bedeckt, und/oder wobei das zweite Material ein Massivholz einer zweiten Art ist und/oder wobei das zweite Material härter als das erste Material ist, und/oder wobei das Furnier aus der gleichen Art von Massivholz wie das zweite Material hergestellt ist, und/oder wobei das erste Material Massivholz einer ersten Art ist, und/oder wobei das erste Material aus einer Gruppe ausgewählt ist, die Buche, Birke, Zeder, Aspe, Ahorn, Fichte und Kiefer umfasst, und/oder das zweite Material aus einer Gruppe ausgewählt ist, die Eiche, Hickory, Mahagoni und Teak umfasst, und/oder wobei das erste und zweite Material Massivholz umfassen, und Holzfasern des ersten und zweiten Materials sich im Wesentlichen in der länglichen Richtung (5) erstrecken, in der besagtes Kernelement länglich ist.

13. Verfahren nach einem der Ansprüche 11 oder 12, wobei besagte mindestens eine Verbindung (9) sich im Wesentlichen in einer Verbindungsebene (12) erstreckt und besagte längliche Richtung (5) eine Normale zur Verbindungsebene bildet.

14. Verfahren nach einem der Ansprüche 11-13, wobei das Furniermaterial das gleiche wie das zweite Material ist, und/oder sich das Furniermaterial von einem ersten zu einem zweiten Ende des Bauteils erstreckt, und/oder das Furnier das Kernelement entlang seiner gesamten Länge bedeckt, und/oder sich die Fasern des Furniers in der gleichen Richtung wie eine Faserrichtung des Endelements erstrecken, und/oder die Furnierschicht an ihren Umfangsendbereichen mit reduzierter Dicke bereitgestellt ist, wodurch eine überlappende Umfangsverbindung mit der gleichen Dicke wie das Furnier außerhalb der Endbereiche bereitgestellt ist.

15. Verfahren nach einem der Ansprüche 11-14, wobei besagte Verbindung (9) aus Keilzinkenverbindungen und Stoßverbindungen ausgewählt ist, und/oder wobei vor dem Anbringen des Furniers das Verbundelement, beispielsweise mittels einer Drehbank, in eine Form mit kreisförmigem Querschnitt gedreht wird.

## Revendications

1. Élément structurel, par exemple pour un meuble, comprenant un élément central (1) dans un premier matériau et au moins un élément d'extrémité (3) dans un second matériau qui est différent du premier matériau, dans lequel l'élément central et le au moins un élément d'extrémité sont assemblés pour former un élément composite (11) avec au moins un joint (9), l'élément composite (11) ayant au moins une section transversale avec un contour externe où l'un quelconque des coins a un angle externe inférieur à 270 degrés, et une couche de placage (13) dans un matériau de placage, fixée à l'élément composite de sorte qu'elle couvre au moins partiellement ledit au moins un joint, **caractérisé en ce que** l'élément composite (11) a une section transversale qui est circulaire, ovale ou elliptique.

2. Élément structurel selon la revendication 1, dans lequel toutes les sections transversales le long de la longueur de l'élément composite (11) ont un contour externe où l'un quelconque des coins a un angle externe inférieur à 270 degrés.

3. Élément structurel selon la revendication 1 ou 2, dans lequel l'élément central (1) est allongé, de préférence un élément d'extrémité (3) est prévu à chaque surface d'extrémité de l'élément central, et/ou la couche de placage (13) couvrant la majeure partie de l'élément central ou même la totalité de l'élément central.

4. Élément structurel selon l'une quelconque des revendications 1 à 3, dans lequel le second matériau est un bois massif d'une seconde essence et/ou dans lequel le second matériau est plus dur que le premier matériau, et/ou dans lequel le placage est réalisé avec les mêmes essences de bois massif que le second matériau, et/ou dans lequel le premier matériau est du bois massif d'une première essence.

5. Élément structurel selon l'une quelconque des revendications précédentes, dans lequel le premier matériau est sélectionné dans un groupe comprenant le hêtre, le bouleau, le cèdre, le tremble, l'érable, l'épinette et le pin, et le second matériau est sélectionné dans un groupe comprenant le chêne, le caryer, l'acajou et le teck, ou dans lequel l'élément central (1) est réalisé avec un matériau sélectionné dans un groupe comprenant des panneaux de particules, des panneaux de MDF et HDF et/ou l'élément central est une construction creuse, comme un tube creux de bois massif, de contreplaqué, de métal, de plastique ou similaire.

6. Élément structurel selon l'une quelconque des revendications précédentes, dans lequel ledit joint (9) est sélectionné parmi les joints à entures multiples et les joints à chant.

7. Élément structurel selon l'une quelconque des revendications précédentes, dans lequel l'élément structurel est un montant de meuble (17), facultativement dans lequel l'élément structurel a la même section transversale circulaire, ovale ou elliptique le long de toute sa longueur.

8. Élément structurel selon l'une quelconque des revendications précédentes, dans lequel la couche de placage est appliquée sous la forme d'une feuille unique de placage couvrant toute la périphérie de l'élément composite, facultativement dans lequel ladite feuille unique de placage peut comprendre deux pièces assemblées ou plus.

9. Élément structurel selon l'une quelconque des revendications précédentes, dans lequel l'un quelconque des coins de la section transversale de l'élément structurel a un angle externe qui est de 252 degrés ou moins, encore de préférence de 240 degrés ou moins, encore de préférence de 232 degrés ou moins, et encore de préférence de 225 degrés ou moins.

10. Meuble (23) **caractérisé en ce qu'**il comprend un élément structurel selon l'une quelconque des revendications précédentes, facultativement dans lequel ledit meuble est une table, un cadre de lit, un placard, une bibliothèque, une unité d'étagère, une étagère, un fauteuil ou un canapé et/ou dans lequel ledit élément structurel fait partie d'une structure de pied dudit meuble.

11. Procédé pour produire un élément structurel, par exemple pour un meuble, **caractérisé par** les étapes consistant à :
prévoir un élément central (1) dans un premier matériau et au moins un élément d'extrémité (3) dans un second matériau qui est différent du premier matériau ;
assembler l'élément central et le au moins un élément d'extrémité pour former un élément composite avec au moins un joint (9) ;
former l'élément composite, dans une forme avec une section transversale ayant un contour externe où l'un quelconque des coins, s'il est présent, a un angle externe inférieur à 270 degrés, et
prévoir, sur l'élément composite, une couche de placage (13) dans un matériau de placage, de sorte qu'elle couvre ledit au moins un joint (9), dans lequel la couche de placage est appliquée sous la forme d'une seule feuille de placage, couvrant toute la périphérie de l'élément composite.

12. Procédé selon la revendication 11, dans lequel l'élément central (1) est allongé, et de préférence un élément d'extrémité (3) est prévu au niveau de chaque surface d'extrémité de l'élément central et/ou la couche de placage (13) couvrant la majeure partie de l'élément central ou même la totalité de l'élément central, et/ou dans lequel le second matériau est un bois massif d'une seconde essence et/ou dans lequel le second matériau est plus dur que le premier matériau, et/ou dans lequel le placage est réalisé avec la même essence de bois massif que le second matériau, et/ou dans lequel le premier matériau est du bois massif d'une première essence, et/ou dans lequel le premier matériau est sélectionné dans le groupe comprenant le hêtre, le bouleau, le cèdre, le tremble, l'érable, l'épinette et le pin, et le second matériau est sélectionné dans un groupe comprenant le chêne, le caryer, l'acajou et le teck, ou dans lequel les premier et second matériaux comprennent le bois massif et les fibres de bois des premier et second matériaux s'étendent sensiblement dans la direction allongée (5), dans laquelle ledit élément central est allongé.

13. Procédé selon l'une quelconque des revendications 11 ou 12, dans lequel ledit au moins un joint (9) s'étend sensiblement dans un plan de joint (12) et ladite direction allongée (5) forme une normale par rapport au plan de joint.

14. Procédé selon l'une quelconque des revendications 11 à 13, dans lequel le matériau de placage est le même que le second matériau et/ou le matériau de placage s'étend à partir d'une première à une seconde extrémité de l'élément structurel, et/ou le placage couvre l'élément central le long de toute sa longueur, et/ou les fibres du placage s'étendent dans la même direction qu'une direction de fibre de l'élément d'extrémité et/ou la couche de placage est prévue, au niveau de ses régions d'extrémité périphériques, avec une épaisseur réduite, fournissant ainsi un joint périphérique chevauchant ayant la même épaisseur que le placage à l'extérieur des régions d'extrémité.

15. Procédé selon l'une quelconque des revendications 11 à 14, dans lequel ledit joint (9) est sélectionné parmi les joints à entures multiples et les joints à chant, et/ou dans lequel, avant la fixation dudit placage, l'élément composite est transformé, au moyen d'un tour, en une forme avec une section transversale circulaire.
